# EUROPÄISCHE PATENTSCHRIFT

(11) **EP 1 237 425 B1**
(45) Veröffentlichungstag und Bekanntmachung des Hinweises auf die Patenterteilung: **25.02.2004**
(21) Anmeldenummer: 00969358.1
(22) Anmeldetag: 29.09.2000
(51) Int. Cl.: A23L 3/00

(54) **VORRICHTUNG UND VERFAHREN ZUM KRYOGENEN FROSTEN**
DEVICE AND METHOD FOR CRYOGENIC FREEZING
DISPOSITIF ET PROCEDE DE CONGELATION CRYOGENIQUE

(30) Priorität: 01.10.1999 DE 19947333; 14.09.2000 DE 10045826
(43) Veröffentlichungstag der Anmeldung: 11.09.2002
(73) Patentinhaber: Linde AG, 65189 Wiesbaden (DE)
(72) Erfinder: KAMM, Volker, 82024 Taufkirchen (DE); SONNENTAG, Michael, 81479 München (DE)
(74) Vertreter: Kasseckert, Rainer
(86) Internationale Anmeldenummer: PCT/EP2000/009583
(87) Internationale Veröffentlichungsnummer: WO 2001/024646

(56) Entgegenhaltungen:
- WO-A-98/24325
- US-A- 5 170 631
- US-A- 5 343 715

## Beschreibung

Die Erfindung betrifft eine Vorrichtung zum Abkühlen von Material in einem Gehäuse, das eine Zuführung für kryogenes Kältemittel aufweist, die mit einer Quelle für kryogenes Kältemittel verbunden ist, sowie Mittel aufweist, die das abzukühlende Material durch die Vorrichtung bewegen, sowie ein Verfahren zum Abkühlen von Material in einem Gehäuse, in das kryogenes Kältemittel eingetragen wird, wobei das Material durch das Gehäuse bewegt wird.

Zum kryogenen Abkühlen, das sowohl kryogenes Frosten wie auch kryogenes Kühlen umfaßt, werden in der Regel Frostantagen wie Spiralfroster, Tunnelfroster oder Frosterschränke eingesetzt. Das abzukühlende Material, beispielsweise Lebensmittel, werden in diesen Vorrichtungen meist mit Hilfe von Bändern bewegt. Diese verbreiteten Frosteranlagen werden zum Teil als sehr große Anlagen gebaut.

Der vorliegenden Erfindung liegt die Aufgabe zugrunde eine Vorrichtung und ein Verfahren zum kryogenen Abkühlen von Material zur Verfügung zu stellen, die sich durch einen geringen Platzbedarf für die Anlage bezogen auf den pro Zeiteinheit erzielbaren Materiaidurchsatz auszeichnen, und eine effiziente Nutzung der eingesetzten Energie ermöglichen.

Diese Aufgabe wird erfindungsgemäß vorrichtungsseitig dadurch gelöst, dass mindestens zwei Türme mit Materialträgem vorgesehen sind, von denen je einer eine Aufwärtsbewegung der Materialträger, sowie ein anderer eine Abwärtsbewegung der Materialträger ermöglicht, wobei an beiden Enden der Türme Mittel zum Transport der Materialträger zu einem der Türme hin und/oder von einem der Türme weg vorgesehen sind, sowie Mittel zum Heben und Senken der Türme und Mittel zur Fixierung der Türme vorgesehen sind.

Bevorzugt sind die Mittel zum Transport der Materialträger so ausgebildet, dass ein Transport der Materialträger von einer Aufgabestelle für das Material zu dem einen Turm, sowie von dem einen Turm zu einem anderen Turm und von dem anderen Turm zu einer Ausgabestelle für das abgekühlte Material stattfinden kann. Besonders bevorzugt weisen die Türme aufeinander gestapelte Materialträger auf. in einer bevorzugten Ausführungsform der Erfindung sind die Mittel zum Transport der Materialträger von einem Turm zum anderen Turm am oberen Ende der Türme, sowie die Mittel zum Transport der Materialträger von der Aufgabestelle zu dem einen Turm und von dem anderen Turm zu der Ausgabestelle für das Material am unteren Ende der Türme vorgesehen. Zweckmäßigerweise stehen an der Aufgabestelle und an der Ausgabestelle Mittel zur Aufgabe, wie beispielsweise ein Springband, und Mittel zur Ausgabe, wie z.B. ein Schieber (pusher) zur Verfügung.

Vorteilhafterweise ist die Zuführung für kryogenes Kältemittel in Nähe zu einer Einrichtung zur Erzeugung eines Gasstromes angeordnet. Bevorzugt ist diese Einrichtung als Ventilator ausgebildet. Durch diese Anordnung steht eine Vorrichtung zur Verfügung, die bewirkt, dass das abzukühlende Produkt einer erzwungenen Konvektion unterliegt. Das kryogene Kältemittel sorgt dabei für die Abkühlung des umgebenden Gases und kann daher als Medium der Konvektion bezeichnet werden.

Eine Weiterbildung der Erfindung sieht vor, dass mehrere Einrichtungen zur Zuführung des kryogenen Kältemittels und/oder mehrere Einrichtungen zur Erzeugung eines Gasstroms in Nähe zueinander sowie an unterschiedlichen Stellen in der Vorrichtung angeordnet sind. Die Zuführungen für kryogenes Kältemittel weisen bevorzugt eine Dosiereinrichtung, auf mit deren Hilfe dann an den unterschiedlichen Zufuhrstellen jeweils eine einstellbare Menge an kryogenem Kältemittel zur Verfügung steht. Damit lassen sich gewünschte Werte für die Kälteleistung, und somit gewünschte Temperaturen in der Vorrichtung einstellen, insbesondere lassen sich verschiedene Temperaturen in verschiedenen Bereichen der Vorrichtung einstellen.
Zweckmäßigerweise sind zwischen den verschiedenen Temperaturbereichen in der Vorrichtung Trennwände vorgesehen. Besonders bevorzugt weist die Zuführung für kryogenes Kältemittel mindestens eine Düse auf.

Die Erfindung kann dadurch weiter ausgestaltet werden, dass die Mittel zum Transport der Materiafträger, sowie die Mittel zur Fixierung der Türme eine hydraulische Verschiebeeinrichtung aufweisen. Bevorzugt kommen auch mechanische Verschiebeeinrichtungen zum Einsatz. Als geeignete mechanische Verschiebeeinrichtung sei beispielhaft ein Kettentrieb oder auch ein Kurbeltrieb genannt. Eine andere Möglichkeit besteht darin die Verschiebeeinrichtung pneumatisch auszuführen. Vorteilhafterweise wird die Verschiebeeinrichtung elektrisch ausgeführt.

Es erweist sich als Vorteil die Materialträger zumindest an den Seiten offen auszubilden, an denen Einrichtungen zur Zuführung des kryogenen Kältemittels angeordnet sind. Ebenso ist es vorteilhaft eine Stapelverstärkung zum Stapeln der Materialträger vorzusehen. Vorteilhafterweise ist die Stapelverstärkung an den Seiten offen ausgebildet, an denen die Einrichtungen zur Zuführung des kryogenen Kältemittels angeordnet sind. Besonders bevorzugt sind die Materialträger als Bleche ausgebildet, insbesondere als zur Aufnahme von Lebensmitteln geeignete Bleche. Zweckmäßigerweise sind die Bleche so ausgebildet, dass sie horizontal für einen Transportwagen passierbar sind, insbesondere für einen als Schlitten ausgebildeten Transportwagen.

Es empfiehlt sich mechanische Mittel zum Heben und Senken der Türme vorzusehen, beispielsweise einen Linearantrieb oder einen Kurbeltrieb. Auch erweisen sich hydraulische Mittel zur Bewegung der Türme als vorteilhaft. Eine andere Möglichkeit besteht in der Ausgestaltung mit pneumatischen Mitteln. Selbstverständlich kann die Erfindung durch elektrische Antriebsmittel weiter ausgestaltet werden.

Zweckmäßigerweise sind Mittel zur Aufgabe des abzukühlenden Materials vorgesehen. Es empfiehlt sich, Mittel zur Ausgabe des Materials vorzusehen. Vorteilhafterweise sind die Mittel zur Aufgabe und die Mittel zur Ausgabe des Materials auf gleicher Höhe vorgesehen. Die Erfindung wird durch auf das Material abgestimmte Fördersysteme zur Aufgabe und Ausgabe des Materials weiter ausgestaltet. Beispielsweise ist zur Aufgabe des Materials ein Springband vorgesehen, sowie zur Ausgabe ein "Pusher" zum Abstreifen des Materials vom Materialträger. Eine andere vorteilhafte Weiterbildung der Erfindung besteht darin, die Mittel zum Transport der Materialträger so auszugestalten, dass die Materialträger kippbar sind. Somit kann das Material von einem schräg gestellten Materialträger herunter gleiten und auf diese Weise ausgegeben werden. Die Kippbewegung wird bevorzugt elektrisch, hydraulisch, pneumatisch oder mechanisch angetrieben.

Eine Weiterbildung der Vorrichtung sieht Mittel zum Transport des ausgegebenen Materials zurück zur Aufgabeseite der Vorrichtung vor. Dadurch weist die Vorrichtung eine Bedienbarkeit von nur einer Seite und damit einen reduzierten Platzbedarf auf. Als besonders vorteilhaft zum Transport von Material und Materialträgern erweisen sich Schlitten, die das Material von der Aufgabe zum aufgabeseitigen Ende eines Turms transportieren und nach Durchlaufen mindestens zweier Türme das Material am ausgabeseitigen Ende des entsprechenden Turms aufnehmen und wahlweise zur Ausgabe- oder zurück zur Aufgabeseite transportieren.

Zweckmäßigerweise sind in der Vorrichtung Mittel zur Steuerung und/oder Überwachung und/oder Regelung der Abkühlung des Materials vorgesehen. Beispielhaft sei hier eine zentrale SPS-Steuerung genannt. Die Mittel sind vorteilhaft so ausgestaltet, dass sie einen vollautomatischen, quasi kontinuierlichen Betrieb der Vorrichtung ermöglichen.

Die Vorrichtung weist, insbesondere für einen dauerhaften Betrieb, bevorzugt ein Gehäuse auf, das als thermisch isolierte Zelle ausgebildet ist.

Verfahrensseitig wird die gestellte Aufgabe dadurch gelöst, dass das Material auf Materialträgem selbststapelnd durch das Gehäuse bewegt wird, wobei mindestens zwei Türme gebildet werden, wobei jeweils mindestens ein Turm gehoben wird und mindestens ein anderer Turm gesenkt wird, sowie die Türme zumindest zeitweise fixiert werden, sowie die Materialträger an den Enden der Türme zu einem der Türme hin und/oder von einem der Türme weg transportiert werden. Das Material wird dabei ähnlich wie in einer nach dem Patemosterprinzip gestalteten Fördereinrichtung bewegt.

In einer bevorzugten Ausführungsform der Erfindung werden die Materialträger am oberen Ende der Türme von einem Turm zum anderen Turm verschoben, sowie am unteren Ende der Türme von der Aufgabestelle zu dem einen Turm und von dem anderen Turm zu der Ausgabestelle für das Material transportiert. Zweckmäßigerweise wird das Material an der Aufgabestelle durch Mittel zur Aufgabe, wie beispielsweise durch ein Springband, aufgegeben und an der Ausgabestelle durch Mittel zur Ausgabe, wie z.B. durch einen Schieber (pusher), ausgegeben.

Nach einer anderen Ausgestaltung der Erfindung werden zur Ausgabe des abgekühlten Materials die Mittel zum Transport der Materialträger gekippt, wodurch das Material auf einfache und schnelle Weise ausgegeben wird.

Je nach Ausgestaltung des Verfahrens werden die Materialträger mechanisch und/oder hydraulisch und/oder pneumatisch und/oder elektrisch besonders vorteilhaft horizontal verschoben und/oder vertikal bewegt.

Eine Weiterbildung des Verfahrens sieht vor, dass das kryogene Kältemittel eingedüst wird. Besonders bevorzugt wird das kryogene Kältemittel in Nähe zu einer Einrichtung zugeführt, durch die ein Gasstrom erzeugt wird. Mit besonderem Vorteil wird das kryogene Kältemittel in der Nähe einer als Ventilator ausgebildeten derartigen Einrichtung zugeführt. Der Einsatz von Stickstoff als kryogenes Kältemittel erweist sich als besonders vorteilhaft.

Gemäß einer besonders bevorzugten Ausführungsform der Erfindung wird das kryogene Kältemittel an mehreren Zufuhrstellen der Vorrichtung zum Abkühlen von Material zugeführt. Es erweist sich als vorteilhaft, dass das abzukühlende Material von kryogenem Kältemittel umströmt wird, das einer erzwungenen Konvektion unterliegt. Besonders vorteilhaft wird mindestens ein Ventilator zur Erzeugung der erzwungenen Konvektion eingesetzt. Es empfiehlt sich, dass das Material von dem kryogenen Kältemittel in annähernd paralleler Richtung zu den Materialträgem angeströmt wird, was beispielsweise durch den Einsatz von Leitblechen erzielt wird.

Bevorzugt wird das Material von dem kryogenen Kältemittel in jeweils benachbarten Materialträgem alternierend einmal von der einen Seite und einmal von der anderen Seite angeströmt. Bei dieser Ausgestaltung der Erfindung wird das kryogene Kältemittel bevorzugt parallel zur Auflagefläche für das Material auf den Materialträgem geleitet, und zwar über die Auflagefläche jedes einzelnen Materialträgers.

Gemäß einer Weiterbildung der Erfindung wird das kryogene Kältemittel so geführt, dass im Bereich der aufgabenahen Materialträger eine Vorkühlzone entsteht, in der das kryogene Kältemittel die Oberfläche das abzukühlenden Materials abkühlt und/oder gefriert. Darüber hinaus wird das Material, das sich noch vergleichsweise warm auf den aufgabenahen Materialträgem befindet, vorteilhaft auf diese Weise vorgekühlt. Diese Vorkühlung wird mit Vorteil allein schon durch die Expansion des kryogenen Kältemittels erzielt, ohne dass in diesem Bereich beispielsweise ein Ventilator zur Erzeugung einer erzwungenen Konvektion eingesetzt wird.

Besonders eignet sich die Erfindung zum Abkühlen von Lebensmitteln. Die Temperatur in der erfindungsgemäßen Vorrichtung wird zweckmäßigerweise durch die Dosierung der Menge des pro Zeiteinheit zugeführten kryogenen Kältemittels eingestellt. Selbstverständlich kann die Erfindung dadurch weiter ausgestaltet werden, dass die Dosierung des kryogenen Kältemittels für mindestens zwei verschiedene Zufuhrstellen verschieden eingestellt wird. Dadurch entstehen im Gehäuse mindestens zwei Bereiche, in denen unterschiedliche Temperaturen herrschen. Zweckmäßigerweise werden zur Abgrenzung dieser Bereiche voneinander Trennwände eingesetzt, wodurch sich die Temperaturdifferenz über längere Zeiträume aufrechterhalten läßt. Dabei stellt sich zusätzlich ein leichtes Temperaturgefälle in den einzelnen Bereichen ein, da die Temperatur mit steigendem Abstand von der Zufuhrstelle für kryogenes Kältemittel zunimmt.

Es empfiehlt sich, Abläufe für austretende Flüssigkeiten, wie beispielsweise Wasser, am Boden des Gehäuses vorzusehen.

Für bestimmte, z.B. zerbrechliche Materialien, erweist es sich als Vorteil, dass das Material in Verbindung mit den Materialträgem aufgegeben und/oder ausgegeben wird. Beispielsweise werden leicht deformierbare Lebensmittel auf den als Materialträger eingesetzten Blechen liegend auf- und ausgegeben.

Eine andere besonders energieeffiziente Möglichkeit besteht darin, das Material getrennt von den Materialträgem auf- und auszugeben. Die Materialträger verbleiben dabei im Gehäuse und übernehmen so die Funktion eines Kältespeichers, was den Energiebedarf der Vorrichtung und des Verfahrens reduziert.

Von Vorteil ist auch, dass das Material auf der gleichen Höhe auf- und ausgegeben wird. Bevorzugt erfolgt die Auf- und Ausgabe an der Aufgabenseite der Vorrichtung. Diese Maßnahme ermöglicht eine weitere Minimierung des Platzbedarfs der Vorrichtung.

### Die Erfindung bietet eine Reihe weiterer wesentlicher Vorteile:

Die erfindungsgemäße Vorrichtung weist einen sehr geringen Platzbedarf bezogen auf die Frostkapazität der Vorrichtung zum kryogenen Abkühlen auf. Der Platzbedarf wird hauptsächlich von der Fördereinrichtung bestimmt, die durch die einer Paternoster-Förderanlage ähnliche Gestaltung einen wesentlich reduzierten Platzbedarf im Vergleich zu anderen Fördersystemen aufweist. Ein weiterer entscheidender Vorteil, auch im Gegensatz zum klassischen Paternoster, ist darin zu sehen, dass die Erfindung sehr wenig bewegte Teile und generell wenig Einbauten im Gehäuse aufweist. Daraus ergibt sich eine hohe Betriebssicherheit, sowie sehr gute Reinigbarkeit der Vorrichtung.

Die nach einer bevorzugten Ausführungsform gestaltete Erfindung, bei der die Türme aus gestapelten Materialträgem aufgebaut sind, weist sogar keine weiteren bewegten Teile am Turm auf. Darüber hinaus ist in diesem Fall eine sehr einfache und gründliche Reinigung der Türme durch das Ausfahren der Materialträger möglich. Außerdem ist es ein Vorteil, die Materialträger zu Wartungszwecken komplett aus der Vorrichtung ausfahren zu können.

Die erfindungsgemäße Stapelung des abzukühlenden Materials in vertikaler Richtung ermöglicht darüber hinaus eine Erweiterung der Vorrichtung nach oben und damit eine vorteilhafte Anpassung an die benötigte Frostkapazität. Die mit der Erfindung erreichte dichte Packung des abzukühlenden Materials erlaubt eine effiziente Nutzung der eingesetzten Energie. Dieser Vorteil wird durch die Möglichkeit noch vergrößert, die Materialträger für mehrere Kühlvorgänge mit jeweils neuem abzukühlendem Material im Froster zu belassen.

Von Vorteil ist auch die Verwendung von lebensmittelverträglichen Werkstoffen in der erfindungsgemäßen Vorrichtung. Besonders vorteilhaft werden alle wesentlichen Komponenten der Erfindung aus lebensmittelverträglichen Werkstoffen gefertigt.

Ein weiterer Vorteil ergibt sich aus der Verwendung eines Gehäuses zum Abkühlen des Materials: Das Gehäuse wird bevorzugt mit einer Absaugung für verdampftes Kältemittel versehen, so dass keine Abgabe von Kältemitteldampf an den Raum, in dem die erfindungsgemäße Vorrichtung betrieben wird, stattfindet. Des Weiteren ist das Gehäuse vorteilhaft isoliert, so dass die Energieverluste über die Außenwände des Gehäuses minimiert werden.

Im folgenden soll die Erfindung anhand eines in den Figuren schematisch dargestellten Ausführungsbeispiels näher erläutert werden:
Figur 1 zeigt eine Vorderansicht zweier erfindungsgemäßer Türme mit einer Hubeinrichtung, Verschiebeeinrichtung und Schlitten.
Figur 2 zeigt eine Seitenansicht des in Figur 1 gezeigten Gegenstands mit Zufuhr für kryogenes Kältemittel, Ventilatoren und Leitblechen.

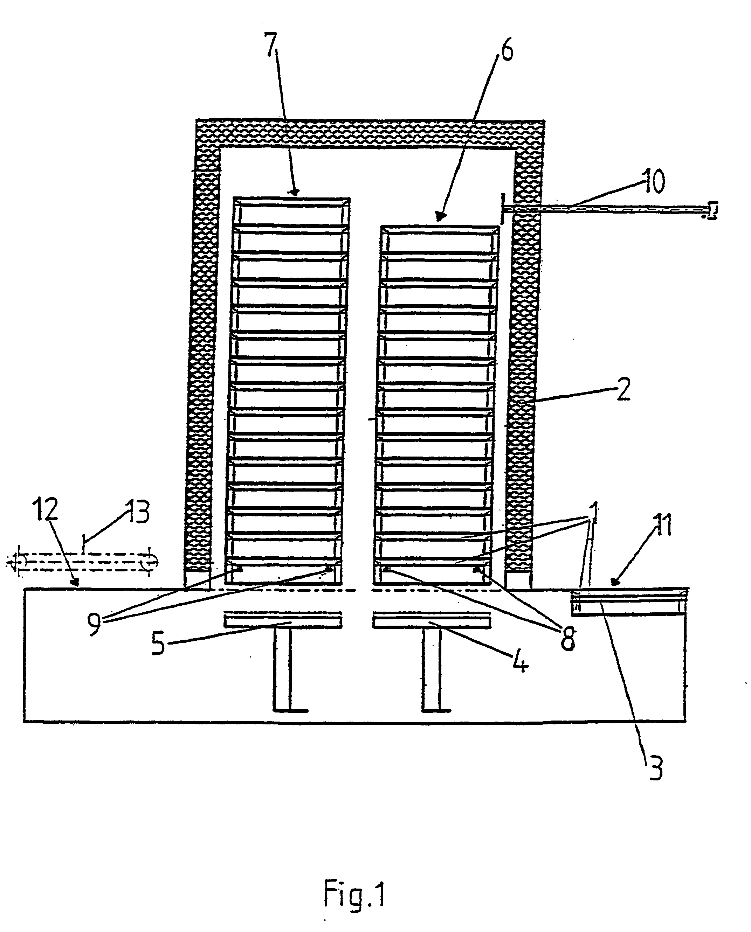

Anhand von Figur 1 wird die Bewegung der Materialträger 1 für den Fall, dass die Materialträger 1 das Gehäuse 2 verlassen, erläutert:
Als Mittel zum Heben und Senken der Türme 6, 7 werden Hubenrichtungen 4, 5 eingesetzt. Zum Fixieren der Türme 6, 7 werden Verriegelungen 8, 9 verwendet. Ein Materialträger 1 wird durch den Schlitten 3 von der Aufgabestelle 11 an die Stelle zwischen rechter Hubeinrichtung 4 und rechtem Turm 6 transportiert. Die rechte Verriegelung 8 wird entriegelt, die rechte Hubeinrichtung 6 hebt den Turm um die Höhe eines Materialträgers an und die rechte Verriegelung wird wieder fixiert. Danach oder zeitgleich hebt sich die linke Hubeinrichtung 5, die linke Verriegelung 9 wird gelöst und die linke Hubeinrichtung 5 senkt sich wieder. Darauf folgend wird der oberste Materialträger des rechten Turms 6 durch die Verschiebeeinrichtung 10 zum linken Turm 7 verschoben. Nach Fixieren der linken Verriegelung 9 kann der unterste Materialträger aus dem linken Turm 7 mit Hilfe des Schlittens 3 aus dem Gehäuse heraustransportiert werden und ein neuer Zyklus beginnt Bei einer Anzahl x an vorhandenen Materialträgem 1 in zwei Türmen 6, 7 benötigt ein bestimmter Materialträger x Zyklen, um durch das Gehäuse 2 transportiert zu werden. An der Ausgabestelle 12 steht ein Pusher 13 zum Abstreifen des Materials vom Materialträger 1 zur Verfügung.

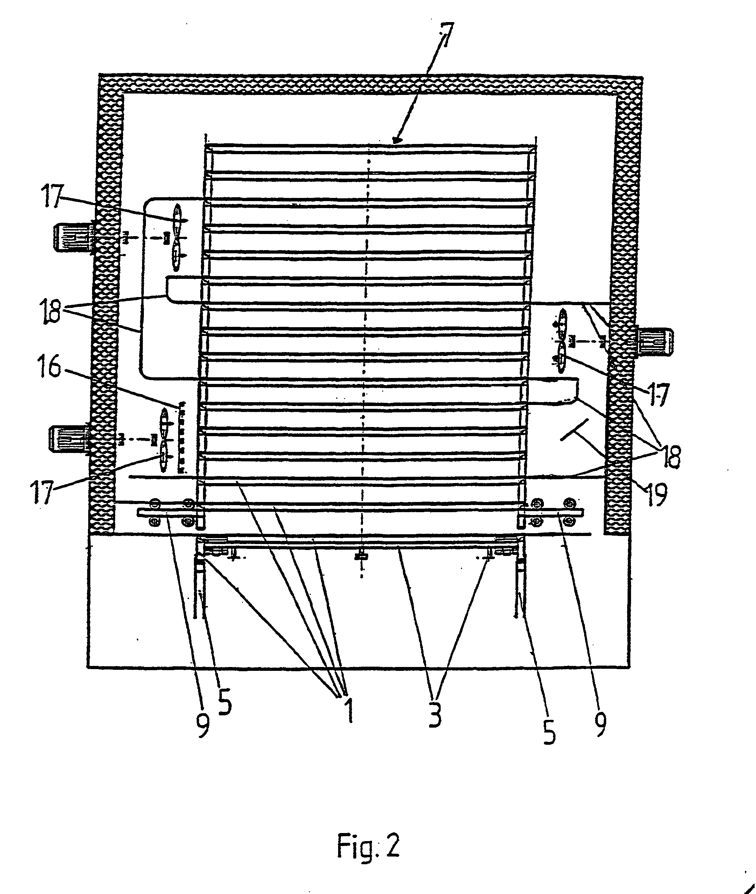

Die Darstellung in Figur 2 zeigt die Zuführung für kryogenes Kältemittel 16, sowie die Ventilatoren 17 zur Erzeugung der erzwungenen Konvektion. Außerdem sind Leitbleche 18 gezeigt, die zur Führung der Strömung angebracht sind, sowie eine Einrichtung zur Temperaturerfassung 19 und die Verriegelung 8. Der Schlitten 3 mit Materialträger 1 befindet sich hier in der Position zwischen linker Hubeinrichtung 5 und linkem Turm 7. Die linke Verriegelung 9 ist in nicht verriegelter Position dargestellt.

## Patentansprüche

1. Vorrichtung zum Abkühlen von Material in einem Gehäuse (2), das eine Zuführung (16) für kryogenes Kältemittel aufweist, die mit einer Quelle für kryogenes Kältemittel verbunden ist, sowie Mittel aufweist, die das abzukühlende Material durch die Vorrichtung bewegen, dadurch geicennzeichnet, dass mindestens zwei Türme (6, 7) mit Materialträgern (1) vorgesehen sind, von denen je einer eine Aufwärtsbewegung der Materialträger, sowie ein anderer eine Abwärtsbewegung der Materialträger ermöglicht, wobei an beiden Enden der Türme (6, 7) Mittel (3, 10) zum Transport der Materialträger (1) zu einem der Türme (6, 7) hin und/oder von einem der Türme (6, 7) weg vorgesehen sind, sowie Mittel (4, 5) zum Heben und Senken der Türme (6, 7) und Mittel (8, 9) zur Fixierung der Türme (6, 7) vorgesehen sind.

2. Vorrichtung nach Anspruch 1, **dadurch gekennzeichnet, dass** die Zuführung (16) für kryogenes Kältemittel in Nähe zu einer Einrichtung (17) zur Erzeugung eines Gasstroms angeordnet ist, insbesondere in Nähe zu einem Ventilator (17).

3. Vorrichtung nach Anspruch 2, **dadurch gekennzeichnet, dass** mehrere Einrichtungen (16) zur Zuführung des kryogenen Kältemittels und/oder mehrere Einrichtungen (17) zur Erzeugung eines Gasstroms in Nähe zueinander sowie an unterschiedlichen Stellen in der Vorrichtung angeordnet sind.

4. Vorrichtung nach einem der Ansprüche 1 bis 3, **dadurch gekennzeichnet, dass** die Zuführung (16) für kryogenes Kältemittel mindestens eine Düse aufweist.

5. Vorrichtung nach einem der Ansprüche 1 bis 4, **dadurch gekennzeichnet, dass** die Mittel (3, 10) zum Transport der Materiaiträger (1), sowie die Mittel (8 ,9) zur Fixierung der Türme (6, 7) eine hydraulische und/oder pneumatische und/oder mechanische und/oder elektrische Verschiebeeinrichtungen aufweisen.

6. Vorrichtung nach einem der Ansprüche 1 bis 5, **dadurch gekennzeichnet, dass** mechanische und/oder hydraulische und/oder elektrische und/oder pneumatische Mittel (4, 5) zum Heben und Senken der Türme vorgesehen sind.

7. Vorrichtung nach einem der Ansprüche 1 bis 6, **dadurch gekennzeichnet, dass** Mittel zur Aufgabe des Materials vorgesehen sind.

8. Vorrichtung nach einem der Ansprüche 1 bis 7, **dadurch gekennzeichnet, dass** Mittel (13) zur Ausgabe des Materials vorgesehen sind.

9. Vorrichtung nach einem der Ansprüche 1 bis 8, **dadurch gekennzeichnet, dass** die Mittel (3) zum Transport der Materialträger (1) so ausgeführt sind, dass die Materialträger (1) kippbar sind.

10. Verfahren zum Abkühlen von Material in einem Gehäuse (2), in das kryogenes Kältemittel eingetragen wird, wobei das Material durch das Gehäuse (2) bewegt wird, **dadurch gekennzeichnet, dass** das Material auf Materialträgem (1) selbststapelnd durch das Gehäuse (2) bewegt wird, wobei mindestens zwei Türme (6, 7) gebildet werden, wobei jeweils mindestens ein Turm (6, 7) gehoben wird und mindestens ein anderer Turm (6, 7) gesenkt wird, sowie die Türme (6, 7) zumindest zeitweise fixiert werden, sowie die Materialträger (1) an den Enden der Türme (6, 7) zu einem der Türme (6, 7) hin und/oder von einem der Türme (6, 7) weg transportiert werden.

11. Verfahren nach Anspruch 10, **dadurch gekennzeichnet, dass** die Materialträger (1) mechanisch und/oder hydraulisch und/oder pneumatisch und/oder elektrisch horizontal verschoben und/oder vertikal bewegt werden.

12. Verfahren nach Anspruch 10 oder 11, **dadurch gekennzeichnet, dass** das kryogene Kältemittel eingedüst wird.

13. Verfahren nach einem der Ansprüche 10 bis 12, **dadurch gekennzeichnet, dass** das kryogene Kältemittel, insbesondere kryogener Stickstoff, in Nähe einer Einrichtung (17) zugeführt wird, durch die ein Gasstrom erzeugt wird.

14. Verfahren nach Anspruch 13, **dadurch gekennzeichnet, dass** das kryogene Kältemittel in Nähe einer als Ventilator (17) ausgebildeten Einrichtung (17) zugeführt wird.

15. Verfahren nach einem der Ansprüche 10 bis 14, **dadurch gekennzeichnet, dass** das kryogene Kältemittel an mindestens zwei Zufuhrstellen einer Vorrichtung zum Abkühlen von Material zugeführt wird.

16. Verfahren nach einem der Ansprüche 10 bis 15, **dadurch gekennzeichnet, dass** das abzukühlende Material von kryogenem Kältemittel, das einer erzwungenen Konvektion unterliegt, umströmt wird.

17. Verfahren nach Anspruch 16, **dadurch gekennzeichnet, dass** mindestens ein Ventilator (17) zur Erzeugung der erzwungenen Konvektion eingesetzt wird.

18. Verfahren nach einem der Ansprüche 10 bis 17, **dadurch gekennzeichnet, dass** das Material von dem kryogenen Kältemittel in annähernd paralleler Richtung zu den Materialträgem (1) angeströmt wird.

19. Verfahren nach Anspruch 18, **dadurch gekennzeichnet, dass** das Material in jeweils benachbarten Materialträgem (1) von dem kryogenen Kältemittel alternierend einmal von der einen Seite und einmal von der anderen Seite angeströmt wird.

20. Verfahren nach einem der Ansprüche 10 bis 19, **dadurch gekennzeichnet, dass** das kryogene Kältemittel so geführt wird, dass im Bereich von aufgabenahen Materialträgem (1) eine Vorkühlzone entsteht, in der das expandierende kryogene Kältemittel die Oberfläche des abzukühlenden Materials anhärtet.

21. Verfahren nach einem der Ansprüche 10 bis 20, **dadurch gekennzeichnet, dass** als abzukühlendes Material Lebensmittel eingesetzt werden.

22. Verfahren nach einem der Ansprüche 10 bis 21, **dadurch gekennzeichnet, dass** die Temperatur in der Vorrichtung zum Abkühlen von Material durch die Dosierung der Menge des pro Zeiteinheit zugeführten kryogenen Kältemittels eingestellt wird.

23. Verfahren nach Anspruch 22, **dadurch gekennzeichnet, dass** die Dosierung des kryogenen Kältemittels für mindestens zwei verschiedenen Zufuhrstellen für kryogenes Kältemittel verschieden eingestellt wird, wodurch im Gehäuse mindestens zwei Bereiche entstehen, in denen unterschiedliche Temperaturen herrschen.

## Claims

1. Apparatus for cooling material in a housing (2) which has a feed (16) for cryogenic refrigerant, which is connected to a source of cryogenic refrigerant, and has means which move the material which is to be cooled through the apparatus, **characterized in that** there are at least two towers (6, 7) with material carriers (1), in each case one of which towers allows an upwards movement of the material carriers and in each case another of which allows a downwards movement of the material carriers, in which apparatus, at the two ends of the towers (6, 7), there are means (3, 10) for conveying the material carriers (1) towards one of the towers (6, 7) and/or away from one of the towers (6, 7), and there are means (4, 5) for raising and lowering the towers (6, 7) and means (8, 9) for fixing the towers (6, 7).

2. Apparatus according to Claim 1, **characterized in that** the feed (16) for cryogenic refrigerant is arranged in the vicinity of a device (17) for generating a gas stream, in particular in the vicinity of a fan (17).

3. Apparatus according to Claim 2, **characterized in that** a plurality of devices (16) for supplying the cryogenic refrigerant and/or a plurality of devices (17) for generating a gas stream are arranged in the vicinity of one another and at different locations in the apparatus.

4. Apparatus according to one of Claims 1 to 3, **characterized in that** the feed (16) for cryogenic refrigerant has at least one nozzle.

5. Apparatus according to one of Claims 1 to 4, **characterized in that** the means (3, 10) for conveying the material carriers (1) and the means (8, 9) for fixing the towers (6, 7) have a hydraulic and/or pneumatic and/or mechanical and/or electrical displacement device.

6. Apparatus according to one of Claims 1 to 5, **characterized in that** there are mechanical and/or hydraulic and/or electrical and/or pneumatic means (4, 5) for raising and lowering the towers.

7. Apparatus according to one of Claims 1 to 6, **characterized in that** there are means for adding the material.

8. Apparatus according to one of Claims 1 to 7, **characterized in that** there are means (13) for removing the material.

9. Apparatus according to one of Claims 1 to 8, **characterized in that** the means (3) for conveying the material carriers (1) are designed in such a way that the material carriers (1) are tiltable.

10. Process for cooling material in a housing (2) into which cryogenic refrigerant is introduced, in which the material is moved through the housing (2), **characterized in that** the material is moved through the housing (2) on self-stacking material carriers (1), with at least two towers (6, 7) being formed, in each case at least one tower (6, 7) being raised and at least one other tower (6, 7) being lowered, and the towers (6, 7) being fixed in place at least from time to time, and the material carriers (1) at the ends of the towers (6, 7) being conveyed towards one of the towers (6, 7) and/or away from one of the towers (6, 7) .

11. Process according to Claim 10, **characterized in that** the material carriers (1) are mechanically and/or hydraulically and/or pneumatically and/or electrically displaced horizontally and/or moved vertically.

12. Process according to Claim 10 or 11, **characterized in that** the cryogenic refrigerant is injected.

13. Process according to one of Claims 10 to 12, **characterized in that** the cryogenic refrigerant, in particular cryogenic nitrogen, is supplied in the vicinity of a device (17) which generates a gas stream.

14. Process according to Claim 13, **characterized in that** the cryogenic refrigerant is supplied in the vicinity of a device (17) which is designed as a fan (17).

15. Process according to one of Claims 10 to 14, **characterized in that** the cryogenic refrigerant is fed to a device for cooling material at at least two feed points.

16. Process according to one of Claims 10 to 15, **characterized in that** cryogenic refrigerant which is subject to forced convection flows around the material which is to be cooled.

17. Process according to Claim 16, **characterized in that** at least one fan (17) is used to generate the forced convection.

18. Process according to one of Claims 10 to 17, **characterized in that** the cryogenic refrigerant flows onto the material in a direction which is approximately parallel to the material carriers (1).

19. Process according to Claim 18, **characterized in that** the cryogenic refrigerant flows onto the material in respectively adjacent material carriers (1) alternately from one side and then the other.

20. Process according to one of Claims 10 to 19, **characterized in that** the cryogenic refrigerant is guided in such a way that a precooling zone, in which the expanding cryogenic refrigerant hardens the surface of the material which is to be cooled, is formed in the region of material carriers (1) near to the location where the material is added.

21. Process according to one of Claims 10 to 20, **characterized in that** foodstuffs are used as the material which is to be cooled.

22. Process according to one of Claims 10 to 21, **characterized in that** the temperature in the apparatus for cooling material is set by metering the quantity of cryogenic refrigerant supplied per unit time.

23. Process according to Claim 22, **characterized in that** the metering of the cryogenic refrigerant is set differently for at least two different feed points for cryogenic refrigerant, with the result that at least two areas in which different temperatures prevail are formed in the housing.

## Revendications

1. Dispositif pour la réfrigération de matériau dans un boîtier (2), lequel présente une conduite (16) pour réfrigérant cryogène reliée à une source de réfrigérant cryogène, et qui présente des moyens pour déplacer le matériau à réfrigérer à travers le dispositif, **caractérisé en ce qu'**au moins deux tours (6, 7) sont prévues avec des porte-matériaux (1), l'une d'entre elles permettant respectivement un déplacement vers le haut des porte-matériaux et l'autre un déplacement vers le bas des porte-matériaux, moyennant quoi des moyens (3, 10) pour le transport des porte-matériaux (1) sont prévus aux deux extrémités des tours (6, 7) pour se rapprocher de l'une des tours (6, 7) et/ou s'éloigner de l'une des tours (6, 7), ainsi que des moyens (4, 5) pour lever et abaisser les tours (6, 7) et des moyens (8, 9) pour la fixation des tours (6, 7).

2. Dispositif selon la revendication 1, **caractérisé en ce que** la conduite (16) pour réfrigérant cryogène est disposée à proximité d'un dispositif (17) pour la génération d'un courant gazeux, en particulier à proximité d'un ventilateur (17).

3. Dispositif selon la revendication 2, **caractérisé en ce que** plusieurs dispositifs (16) pour l'amenée du réfrigérant cryogène et/ou plusieurs dispositifs (17) pour la production d'un courant gazeux sont disposés à proximité les uns des autres ainsi qu'en différents emplacements à l'intérieur du dispositif.

4. Dispositif selon l'une quelconque des revendications 1 à 3, **caractérisé en ce que** la conduite (16) pour réfrigérant cryogène présente au moins une tuyère.

5. Dispositif selon l'une quelconque des revendications 1 à 4, **caractérisé en ce que** les moyens (3, 10) pour le transport des porte-matériaux (1) ainsi que les moyens (8, 9) pour la fixation des tours (6, 7) présentent un dispositif de déplacement hydraulique et/ou pneumatique et/ou mécanique et/ou électrique.

6. Dispositif selon l'une quelconque des revendications 1 à 5, **caractérisé en ce que** des moyens (4, 5) mécaniques et/ou hydrauliques et/ou électriques et/ou pneumatiques sont prévus pour lever et abaisser les tours.

7. Dispositif selon l'une quelconque des revendications 1 à 6, **caractérisé en ce que** des moyens sont prévus pour la charge du matériau.

8. Dispositif selon l'une quelconque des revendications 1 à 7, **caractérisé en ce que** des moyens (13) sont prévus pour la délivrance du matériau.

9. Dispositif selon l'une quelconque des revendications 1 à 8, **caractérisé en ce que** les moyens (3) pour le transport des porte-matériaux (1) sont conçus de manière à ce que les porte-matériaux (1) soient culbutables.

10. Procédé pour réfrigérer des matériaux dans un boîtier (2) dans lequel un réfrigérant cryogène est introduit, où le matériau est déplacé à travers le boîtier, **caractérisé en ce que** le matériau est déplacé à travers le boîtier (2) sur des porte-matériaux (1) par empilage automatique, moyennant quoi au moins deux tours (6, 7) sont formées, où respectivement au moins une tour (6, 7) est soulevée et au moins une autre tour (6, 7) est abaissée, et où les tours (6, 7) sont fixées au moins par intermittence, et où les porte-matériaux (1) sont transportés aux extrémités des tours (6, 7) en se rapprochant de l'une des tours (6, 7) et/ou en s'éloignant de l'une des tours (6, 7).

11. Procédé selon la revendication 10, **caractérisé en ce que** les porte-matériaux (1) sont déplacés horizontalement et/ou verticalement de façon mécanique et/ou hydraulique et/ou pneumatique et/ou électrique.

12. Procédé selon l'une quelconque des revendications 10 ou 11, **caractérisé en ce que** le réfrigérant cryogène est introduit avec une tuyère.

13. Procédé selon l'une quelconque des revendications 10 à 12, **caractérisé en ce que** le réfrigérant cryogène, en particulier de l'azote cryogène, est amené à proximité d'un dispositif (17), avec lequel un courant gazeux est généré.

14. Procédé selon la revendication 13, **caractérisé en ce que** le réfrigérant cryogène est amené à proximité d'un dispositif (17) développé en tant que ventilateur (17).

15. Procédé selon l'une quelconque des revendications 10 à 14, **caractérisé en ce que** le réfrigérant cryogène est amené en au moins deux emplacements d'amenée d'un dispositif pour la réfrigération de matériau.

16. Procédé selon l'une quelconque des revendications 10 à 15, **caractérisé en ce que** le matériau à réfrigérer est contourné par un courant de réfrigérant cryogène qui est soumis à une convection forcée.

17. Procédé selon la revendication 16, **caractérisé en ce qu'**au moins un ventilateur (17) est utilisé pour la génération de la convection forcée.

18. Procédé selon l'une quelconque des revendications 10 à 17, **caractérisé en ce que** le réfrigérant cryogène afflue vers le matériau dans une direction à peu près parallèle aux porte-matériaux (1).

19. Procédé selon la revendication 18, **caractérisé en ce que** le réfrigérant cryogène afflue vers le matériau dans des porte-matériaux (1) respectivement voisins, en alternance une fois par un côté et une fois par l'autre côté.

20. Procédé selon l'une quelconque des revendications 10 à 19, **caractérisé en ce que** le réfrigérant cryogène est guidé de manière à ce que dans la zone à proximité de charge des porte-matériaux (1), une zone de préréfrigération se forme, dans laquelle le réfrigérant cryogène en expansion durcit la surface du matériau à réfrigérer.

21. Procédé selon l'une quelconque des revendications 10 à 20, **caractérisé en ce que** des aliments sont utilisés en guise de matériaux à réfrigérer.

22. Procédé selon l'une quelconque des revendications 10 à 21, **caractérisé en ce que** la température dans le dispositif pour la réfrigération de matériau est réglée par le dosage de la quantité du réfrigérant cryogène amené par unité de temps.

23. Procédé selon la revendication 22, **caractérisé en ce que** le dosage du réfrigérant cryogène est réglé de manière différente pour au moins deux emplacements d'amenée différents du réfrigérant cryogène, moyennant quoi au moins deux zones se forment dans le boîtier, à l'intérieur desquelles règnent différentes températures.
